# EUROPEAN PATENT SPECIFICATION

(11) **EP 2 587 707 B1**
(45) Date of publication and mention of the grant of the patent: **23.01.2019**
(21) Application number: 11797601.9
(22) Date of filing: 20.06.2011
(51) Int. Cl.: H04L 1/24, H04L 1/16, H04W 88/08

(54) **METHOD AND BASE STATION FOR CORRECTING CHANNEL QUALITY INDICATOR (CQI)**
VERFAHREN UND BASISSTATION ZUM BERICHTIGEN DER KANALQUALITÄTSINDIKATORINFORMATION
PROCÉDÉ ET STATION DE BASE PERMETTANT DE CORRIGER UN INDICATEUR DE QUALITÉ DE CANAL (CQI)

(30) Priority: 23.06.2010 CN 201010212093
(43) Date of publication of application: 01.05.2013
(73) Proprietor: ZTE Corporation, Shenzhen, Guangdong 518057 (CN)
(72) Inventor: LI, Ruifeng, Guangdong 518057 (CN); CHENG, Yichao, Guangdong 518057 (CN); PENG, Zhibiao, Guangdong 518057 (CN)
(74) Representative: Hoyle, Benjamin James
(86) International application number: PCT/CN2011/075976
(87) International publication number: WO 2011/160570

(56) References cited:
- EP-A2- 1 592 139
- WO-A1-2007/137447
- CN-A- 1 728 582
- CN-A- 101 247 150
- CN-A- 101 626 614
- CN-A- 101 877 624
- US-A1- 2006 093 024

## Description

### Field of the Invention

The present invention relates to the communication field, and in particular to a method for correcting a Channel Quality Indicator (referred as to CQI) and a base station.

### Background of the Invention

Compared with Wideband Code Division Multiple Access (referred as to WCDMA) services, the throughput of High Speed Downlink Packet Access (referred as to HSDPA) and successive High Speed Packet Access Plus (referred as to HSPA+) are significantly improved. However, how to achieve higher HSDPA or HSPA+ throughput is a very important problem.

Since a certain time delay and error may occur when a User Equipment (referred as to UE) reports CQIs, for the CQIs of some bands, there may be a quite large deviation of modulation and transport blocks because of such differences.

During the implementation of the present invention, the following shortcoming existed in the related art are found by inventors: the CQI reporting error results in a quite large deviation of modulation mode and transport blocks, and thereby the improvement of user throughput is affected.

CN 101626614A, US 2006/093024 A1, and EP 1592139A2 provide respective technical solutions; however, the above mentioned problem still remains unsolved.

### Summary of the Invention

The main object of the present invention is to provide a method for correcting a CQI and a base station to solve the problem of CQI reporting error.

According to one aspect of the present invention, a method for correcting a CQI is provided, wherein the method is used in High Speed Downlink Packet Access (HSDPA) services or High Speed Packet Access Plus (HSPA+) services and comprises: acquiring a CQI reported by a User Equipment (UE); according to a relation between a user ability level and a preset Block Error Rate (BLER), setting a target BLER corresponding to the CQI; adjusting an outer loop processing value according to the target BLER; and correcting the CQI according to the adjusted outer loop processing value.

The step of correcting the CQI according to the adjusted outer loop processing value comprises: setting CQI= CQI - outer loop processing value/N, wherein N is a processing weight value preset by users.

The above method further comprises: respectively calculating transport blocks under modulations supported by the user ability level, according to the adjusted CQI; and choosing a modulation for a largest transport block as a preferred modulation

Preferably, the step of according to the relation between the user ability level and the preset BLER, setting the target BLER corresponding to the CQI comprises: according to the relation between the user ability level and the preset BLER, classifying the CQI to a corresponding CQI range, and setting the target BLER corresponding to the CQI range.

Preferably, the step of adjusting the outer loop processing value according to the target BLER comprises: setting an adjusted intermediate value according to the target BLER, wherein the adjusted intermediate value K = (1- target BLER) / target BLER; and adjusting the outer loop processing value, according to an ACK/NACK feedback by the UE and the adjusted intermediate value.

Preferably, adjusting the outer loop processing value, according to the ACK/NACK feedback by the UE and the adjusted intermediate value comprises: if the NACK is received, the outer loop processing value AdjOutloop=AdjOutloop+K; and if the ACK is received, Adj Outloop=Adj Outloop-1.

Preferably, N is 100 or 1000.

Preferably, the above method further comprises: judging a single-stream or dual-stream CQI according to the CQI; and correcting the single-stream CQI or dual-stream CQI respectively.

Preferably, the above method further comprises: setting power used by High Speed Downlink Shared Channel (HSDSCH) to be pilot power + Measure Power Offset (MPO), wherein the MPO is a MPO configured to each HSDPA user by a Radio Network Controller (RNC)

A base station, used for High Speed Downlink Packet Access (HSDPA) services or High Speed Packet Access Plus (HSPA+) services, characterized by comprising:a Channel Quality Indicator (CQI) acquiring module, configured to acquire a CQI reported by a User Equipment (UE); a Block Error Rate (BLER) setting module, configured to set a target BLER corresponding to the CQI according to a relation between a user ability level and a preset error rate; an outer loop processing values adjustment module, configured to adjust a outer loop processing value according to the target BLER; and a CQI correcting module, configured to correct the CQI according to the adjusted outer loop processing value, wherein the CQI correcting module is further configured to set CQI= CQI - outer loop processing value/N, wherein N is a processing weight value preset by users.

The base station further comprises: a modulation selecting module, configured to calculate transport blocks respectively under the modulations supported by the user ability level according to the adjusted CQI and to choose the largest modulation as a preferred modulation.

Preferably, the BLER setting module, is further configured to classify the CQI to a corresponding CQI range according to the relation between the user ability level and the preset BLER, and to set the target BLER corresponding to the CQI range.

In the present invention, by comparing correct outer loops for the data channels, the CQI is adjusted and compensated so as to overcome the CQI reporting error in the related art, which can reduce the deviation of modulations and transport blocks, and improve user throughput.

### Brief Description of the Drawings

The drawings illustrated here provided a further understanding of the present invention and form a part of the present application. The exemplary embodiments and the description thereof are used to explain the present invention without unduly limiting the scope of the present invention. In the drawings:
Fig. 1 is a flow chart of a method for correcting a CQI according to Method Embodiment I of the present invention;
Fig. 2 is a flow chart of a method for correcting a CQI according to Method Embodiment II of the present invention;
Fig. 3 is a flow chart of a method for correcting a CQI according to Method Embodiment V of the present invention;
Fig. 4 is a flow chart of adjusting an outer loop processing value in a method for correcting a CQI according to Method Embodiment VI of the present invention; and
Fig. 5 is a schematic diagram of a base station according to Apparatus Embodiment I of the present invention.

### Detailed Description of Embodiments

The present invention will now be described in detail with reference to the drawings and in conjunction with embodiments. It needs to be noted that the embodiments of the present invention and the features in the embodiments can be combined with each other if there is no conflict.

### Method Embodiment I

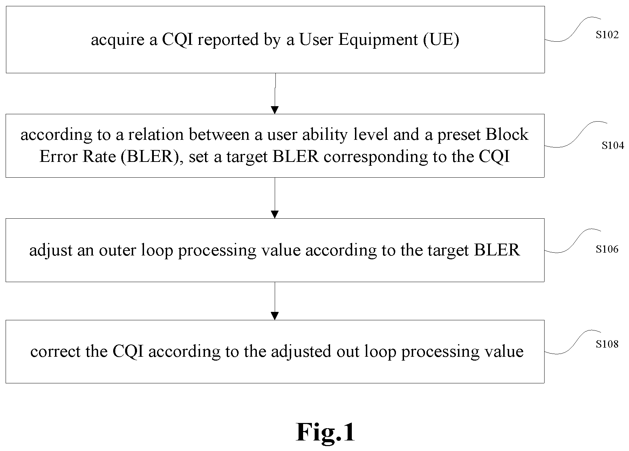

Figure 1 is a flow chart of a method for correcting a CQI according to Method Embodiment I of the present invention. As shown in Figure 1, the embodiment comprises the steps as follows.

Step S102, a CQI reported by a User Equipment (referred to as UE) is acquired.

Step S104, according to a relation between a user ability level and a preset Block Error Rate (BLER), a target BLER (referred to as BLER) corresponding to the CQI is set.

Step S106, an outer loop processing value is adjusted according to the target BLER.

Step S108, the CQI is corrected according to the adjusted outer loop processing value.

The method provided by the embodiment is applicable to the field of WCDMA or the successive evolved HSPA+ field of Time Division-Synchronous Code Division Multiple Access (referred as to TD-SCDMA). In the embodiment, the CQI is adjusted and compensated by way of comparing correct outer loops for data channels, so the time delay and error for reporting the CQI in the related art are overcome.

### Method Embodiment II

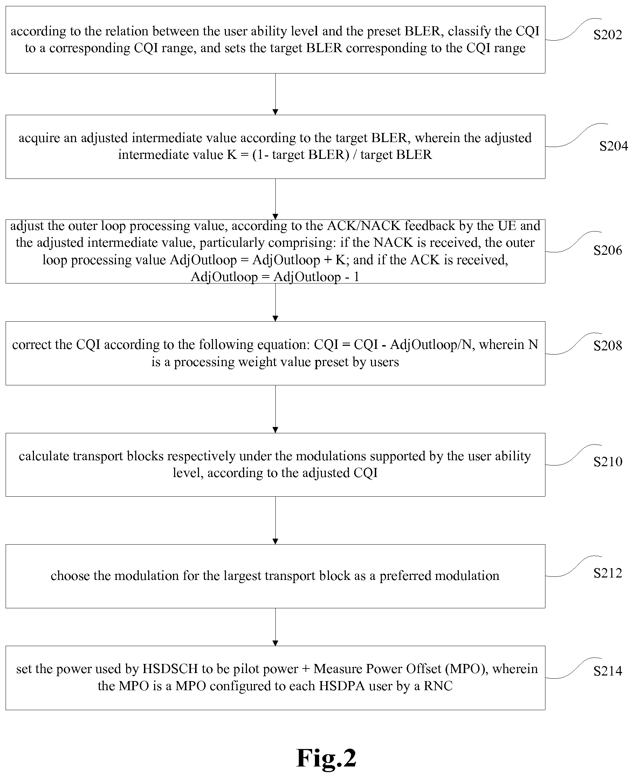

The method for correcting a CQI is described further in the embodiment on the basis of Method Embodiment I. Figure 2 is a flow chart of a method for correcting a CQI according to Method Embodiment II of the present invention. As shown in Figure 2, the method comprises the steps as follows.

Step S202, the CQI is classified to a corresponding CQI range according to the relation between the user ability level and the preset BLER, and the target BLER corresponding to the CQI range is set.

Step S204, an adjusted intermediate value is set according to the target BLER, wherein the adjusted intermediate value K = (1- target BLER) / target BLER.

Step S206, the outer loop processing value is adjusted, according to an ACK/NACK feedback by the UE and the adjusted intermediate value, particularly comprising: if the NACK is received, the outer loop processing value AdjOutloop = AdjOutloop+K; and if the ACK is received, AdjOutloop = AdjOutloop-1.

Step S208, the CQI is corrected according to the following equation: CQI = CQI - AdjOutloop /N, wherein N is a processing weight value preset by users.

Step S210, transport blocks are calculated respectively under the modulations supported by the user ability level, according to the adjusted CQI.

Step S212, the modulation for the largest transport block is chosen as a preferred modulation.

Step S214, the power used by High Speed Downlink Shared Channel (referred as to HSDSCH) is set to be pilot power + Measure Power Offset (referred as to MPO), wherein the MPO is a MPO configured for each HSDPA user by a Radio Network Controller (referred as to RNC).

In the embodiment, the target BLER is controlled in segment according to various channel qualities (to set the target BLER in segment according to the CQI). Meanwhile, the power used by HSDSCH is enhanced appropriately to reduce the BLER for the data channels, and thereby the user throughput of HSDPA and HSPA+ is improved.

The embodiment provides a new kind of algorithm for improving the throughput of HSDPA and HSPA+, and thereby higher throughput and better user experience are achieved under the same resource conditions. The following embodiments from Embodiment III to Embodiment V are the applications of the present invention under various scenarios.

### Method Embodiment III

The embodiment is in such a scenario that users with an ability level 6, an ability level 8 and an ability level 10 are included for general HSDPA services. The embodiment comprises the processing as follows.
1: The Channel Quality Indicator (CQI) is controlled by range, for example, for the UE with the ability level 8, when the Channel Quality Indicator (CQI) ranges from 1 to 15, the target BLER is 15%; when the CQI ranges from 16 to 25, the target BLER is 10%; and when the CQI ranges from 26 to 30, the target BLER is 5%.
2: The CQI processed by outer loops is obtained, by the CQI reported by the UE subtracting one-Nth of an outer loop processing value AdjOutLoop of the HSDSCH of the UE.
3: Each transport block is calculated respectively under QPSK and 16QAM according the processed CQI by outer loop, the available High-speed Physical Downlink Shared Channel (HSPDSCH) channels of current cells and the available power of HSPDSCH, and the larger transport block is chosen from these two kinds of transport blocks and corresponding modulation is chosen. Meanwhile the power used by the HSDSCH is set to be pilot power + Measure Power Offset (if the ability level is 8, it is required to reduce the HSDSCH power when the CQI is greater than 25, but the throughput is improved in the present invention by using power compensation method to reduce the BLER).

The embodiment is the application of Method Embodiment II under a specific scenario, with all beneficial effects of the above embodiments, and no repetitive details will be given herein.

### Method Embodiment IV

The embodiment is in such a scenario that users with an ability level 14 are 64QAM users. The embodiment comprises the processing as follows.
1: The Channel Quality Indicator (CQI) is controlled by range, for example, for the UE with the ability level 8, when the Channel Quality Indicator (CQI) ranges from 1 to 15, the target BLER is 15%; when the CQI ranges from 16 to 25, the target BLER is 10%, and when the CQI ranges from 26 to 30, the target BLER is 5%;
2: The CQI processed by outer loops is obtained, by the CQI reported by the UE subtracting one-Nth of the outer loop processing value AdjOutLoop of the HSDSCH of the UE.
3: Each transport block is calculated respectively under QPSK, 16QAM and 64QAM according the processed CQI by outer loop, the available High-speed Physical Downlink Shared Channel (HSPDSCH) channels of current cells and the available power of HSPDSCH, and the larger transport block is chosen from these two kinds of transport blocks and corresponding modulation is chosen. Meanwhile the power used by the HSDSCH is set to be pilot power + Measure Power Offset.

The embodiment is the application for Method Embodiment II under a specific scenario, with all beneficial effects of the above embodiments, and no repetitive details will be given herein.

### Method Embodiment V

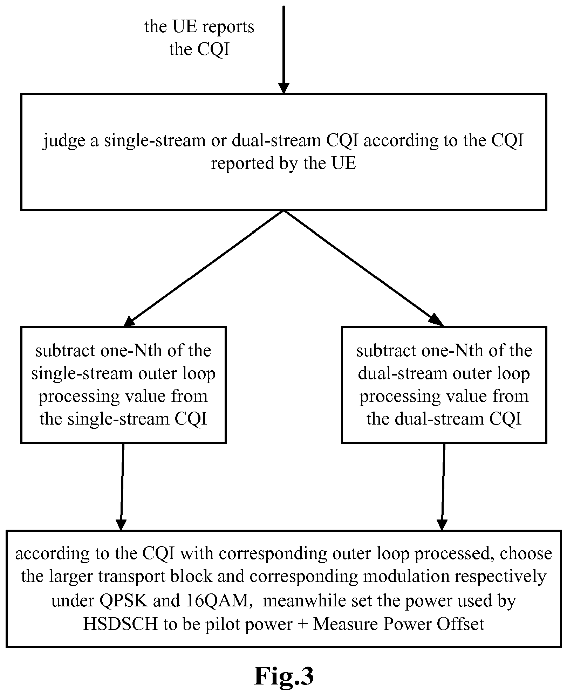

The embodiment is in such a scenario that users with an ability level 16 and an ability level 18 are Multiple Input Multiple Output (MIMO) users. Fig.3 is a flow chart of a method for correcting a CQI according to Method Embodiment V of the present invention. As shown in Fig.3, the method comprises the steps as follows.
1: The single-stream CQIs of MIMO is divided. When the CQI ranges from 1 to 15, the target BLER is 15%; when the CQI ranges from 16 to 25, the target BLER is 10%; and when the CQI ranges from 26 to 30, the target BLER is 5%. In the dual-stream CQIs (ranges from 0 to 14), when the CQI ranges from 0 to 6, the corresponding target BLER is 10%; and when the CQI ranges from 7 to 14, the target BLER is 5%.
2: The single-stream outer loops and dual-stream outer loops are processed respectively. If the CQI reported by the UE is a dual-stream CQI (the CQI ranges from 1 to 30), the CQI processed by outer loops is obtained by the CQI reported by the UE subtracting one-Nth of the outer loop processing value AdjOutLoop of the dual-stream HSDSCH of the UE. If the CQI is a single-stream CQI, the CQI processed by single-stream outer loops is obtained by the CQI reported by the UE subtracting one-Nth of the outer loop processing value AdjOutLoop of the single-stream HSDSCH of the UE.
3: According to the CQI processed by corresponding outer loops, the larger transmission block and corresponding modulation are chosen respectively under QPSK and 16QAM, and meanwhile the power used by HSDSCH is set to be pilot power + Measure Power Offset

The embodiment is the application for Method Embodiment II under a specific scenario, with all beneficial effects of the above embodiments, and no repetitive details will be given herein.

### Method Embodiment VI

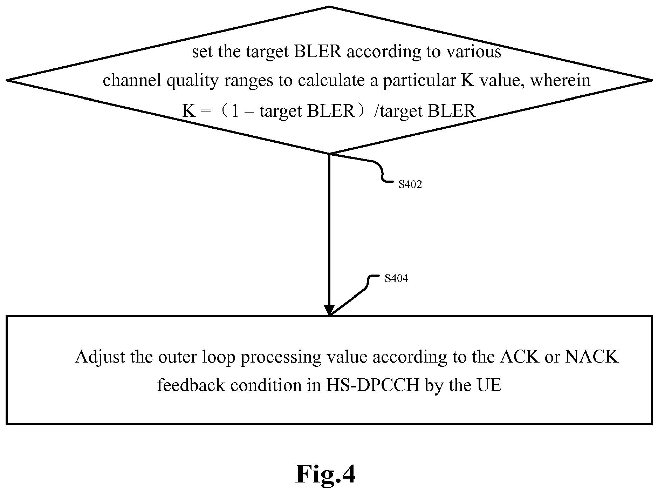

The outer loop processing value of the HSPDSCH will be described in the embodiment. Fig.4 is a flow chart of adjusting an outer loop processing value in a method for correcting a CQI according to Method Embodiment VI of the present invention. As shown in Fig.4, the method comprises the steps as follows.

S402, the target BLER is set according to various channel quality ranges to calculate a particular K value, wherein K = (1 - target BLER) /target BLER.

S404. The outer loop processing value is adjusted according to the ACK or NACK feedback condition in High-Speed Dedicated Physical Control Channel (referred to as HS-DPCCH) by the UE. Particularly:
if the NACK is received, according to the based CQI of the transport block corresponding to the feedback information, the K value of the range to which the CQI belong is determined, and the outer loop processing value is added to the K value; and
if the ACK is received, 1 is subtracted from the outer loop processing value directly.

The steps of adjusting the outer loop processing values of the HSPDSCH in various embodiments from Method Embodiment II to Method Embodiment IV are described in the embodiment, which has all beneficial effects of the above embodiments, and has more powerful implementations.

### Apparatus Embodiment I

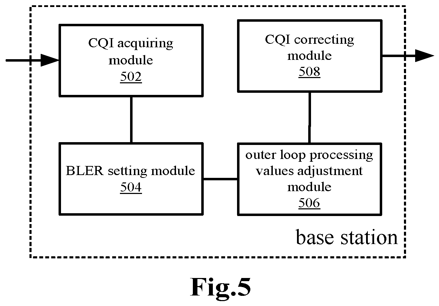

A base station for HSDPA or HSPA+ services is provided by the embodiment. Fig. 5 is a schematic diagram of a base station according to Apparatus Embodiment I of the present invention. As shown in Fig. 5, the base station comprises: a CQI acquiring module **502,** which is configured to acquire a CQI reported by a UE; a BLER setting module **504,** which is coupled to the CQI acquiring module **502** and configured to set a target Block Error Rate (BLER) corresponding to the CQI according a relation between a user ability level and a preset error rate; an outer loop processing values adjustment module **506,** which is coupled to the BLER setting module 504, and configured to adjust an outer loop processing value according to the target BLER; and a CQI correcting module **508,** which is coupled to the adjusting module for outer loop processing value 506 and configured to correct the CQI according to the adjusted outer loop processing value.

The method implemented by the embodiment can be referred to the relevant descriptions of Method Embodiment I, and has all beneficial effects of the above embodiments. No repetitive details will be given herein.

### Apparatus Embodiment II

Every module in the base station of Apparatus Embodiment I will be described in detail in the embodiment.

In the embodiment, the BLER setting module is further configured to classify the CQI to a corresponding CQI range according to the relation between the user ability level and the preset BLER, and to set the target BLER corresponding to the CQI range.

In the embodiment, the adjusting module for outer loop processing module comprises: an adjusted intermediate valve sub-module, configured to set an adjusted intermediate value according to the target BLER, wherein the adjusted intermediate value K = (1- target BLER)/target BLER; and an adjusting sub-module for outer loop processing value, configured to adjusting the outer loop processing value according to an ACK/NACK feedback by the UE and the adjusted intermediate value,

Preferably, if the NACK is received, the outer loop processing value AdjOutloop = AdjOutloop+K; and if the ACK is received, AdjOutloop = AdjOutloop-1.

In the embodiment, the CQI correcting module is further configured to correct the CQI according to the following equation: CQI = CQI - outer loop processing value/N, wherein N is a processing weight value preset by users.

In the embodiment, the base station further comprises: a modulation selecting module, configured to calculate transport blocks respectively under the modulations supported by the user ability level according to the adjusted CQI and to choose the largest modulation as a preferred modulation; and a power adjustment module, configured to set the power used by HSDSCH to be pilot power + Measure Power Offset (MPO), wherein the MPO is the MPO configured for each HSDPA user by a RNC.

The method implemented by the embodiment can be referred to the relevant descriptions of Method Embodiment II, and has all beneficial effects of the above embodiments. No repetitive details will be given herein.

Apparently, those skilled in the art shall understand that the above-mentioned modules and steps of the present invention can be realized by using general purpose calculating device, can be integrated in one calculating device or distributed on a network which consists of a plurality of calculating devices. Alternatively the modules and the steps of the present invention can be realized by using the executable program code of the calculating device. Consequently, they can be stored in the storing device and executed by the calculating device, and in some cases, the steps shown or described can be carried out in a different order, or they are made into integrated circuit module respectively, or a plurality of modules or steps thereof are made into one integrated circuit module. In this way, the present invention is not limited to the combination of any specific hardware and software.

Above descriptions are only to illustrate the preferred embodiments but not to limit the present invention. Various alterations and changes to the present invention are apparent to those skilled in the art.

## Claims

1. A method for correcting a Channel Quality Indicator (CQI), used in High Speed Downlink Packet Access (HSDPA) services or High Speed Packet Access Plus (HSPA+) services, **characterized by** comprising:
acquiring (S102) a CQI reported by a User Equipment (UE);
according to a relation between a user ability level and a preset Block Error Rate (BLER), setting (S104) a target BLER corresponding to the CQI;
adjusting (S106) an outer loop processing value according to the target BLER; and
correcting (S108) the CQI according to the adjusted outer loop processing value,
wherein the step of correcting the CQI according to the adjusted outer loop processing value comprises setting (S208) CQI= CQI - outer loop processing value/N, wherein N is a processing weight value preset by users;
**characterized in that** the method further comprises: respectively calculating (S210) transport blocks under modulations supported by the user ability level, according to the adjusted CQI; and
choosing (S212) a modulation for a largest transport block as a preferred modulation.

2. The method according to Claim 1, **characterized in that** the step of according to the relation between the user ability level and the preset BLER, setting the target BLER corresponding to the CQI comprises:
according to the relation between the user ability level and the preset BLER, classifying the CQI to a corresponding CQI range, and setting the target BLER corresponding to the CQI range (S202).

3. The method according to Claim 1, **characterized in that** the step of adjusting the outer loop processing value according to the target BLER comprises:
setting (S204) an adjusted intermediate value according to the target BLER, wherein the adjusted intermediate value K = (1- target BLER) / target BLER; and
adjusting (S206) the outer loop processing value, according to an ACK/NACK feedback by the UE and the adjusted intermediate value.

4. The method according to Claim 3, **characterized in that** adjusting the outer loop processing value, according to the ACK/NACK feedback by the UE and the adjusted intermediate value comprises:
if the NACK is received, the outer loop processing value AdjOutloop=AdjOutloop+K; and if the ACK is received, AdjOutloop=AdjOutloop-1 (S206).

5. The method according to Claim 1, **characterized in that** N is 100 or 1000.

6. The method according to Claim 1, **characterized in that** the method further comprises:
judging a single-stream or dual-stream CQI according to the CQI; and
correcting the single-stream CQI or dual-stream CQI respectively.

7. The method according to Claim 6, **characterized in that** the method further comprises:
setting (S214) power used by High Speed Downlink Shared Channel (HSDSCH) to be pilot power + Measure Power Offset (MPO), wherein the MPO is a MPO configured to each HSDPA user by a Radio Network Controller (RNC).

8. A base station, used for High Speed Downlink Packet Access (HSDPA) services or High Speed Packet Access Plus (HSPA+) services, **characterized by** comprising:
a Channel Quality Indicator (CQI) acquiring module (502), configured to acquire a CQI reported by a User Equipment (UE);
a Block Error Rate (BLER) setting module (504), configured to set a target BLER corresponding to the CQI according to a relation between a user ability level and a preset error rate;
an outer loop processing values adjustment module (506), configured to adjust a outer loop processing value according to the target BLER; and
a CQI correcting module (508), configured to correct the CQI according to the adjusted outer loop processing value, wherein the CQI correcting module (508) is further configured to set CQI= CQI - outer loop processing value/N, wherein N is a processing weight value preset by users;
**characterized in that** the base station further comprises: a modulation selecting module, configured to calculate transport blocks respectively under the modulations supported by the user ability level according to the adjusted CQI and to choose the largest modulation as a preferred modulation.

9. The base station according to Claim 8, **characterized in that**:
the BLER setting module (504), is further configured to classify the CQI to a corresponding CQI range according to the relation between the user ability level and the preset BLER, and to set the target BLER corresponding to the CQI range.

## Patentansprüche

1. Ein Verfahren zum Korrigieren eines Channel Quality Indicator (CQI), der in High Speed Downlink Packet Access (HSDPA)-Diensten oder High Speed Packet Access Plus (HSDPA+)-Diensten verwendet wird, **dadurch gekennzeichnet, dass** es aufweist:
Erwerben (S102) eines von einem User Equipment (UE) gemeldeten CQI;
nach Maßgabe eines Verhältnisses zwischen einem User-Fähigkeitsniveau und einer vorgegebenen Blockfehlerrate (BLER), Einstellen (S104) einer Ziel-BLER entsprechend dem CQI;
Anpassen (S106) eines Outer-Loop-Verarbeitungswertes nach Maßgabe der Ziel-BLER; und
Korrigieren (S108) des CQI nach Maßgabe des angepassten Outer-Loop-Verarbeitungswertes,
wobei der Schritt des Korrigierens des CQI nach Maßgabe des angepassten Outer-Loop-Verarbeitungswertes das Einstellen (S208) von CQI = CQI - Outer-Loop-Verarbeitungswert / N aufweist, wobei N ein von Usern vorgegebener Verarbeitungsgewichtswert ist;
**dadurch gekennzeichnet, dass**
das Verfahren ferner aufweist: jeweiliges Berechnen (S210) von Transportblöcken unter Modulationen, die vom User-Fähigkeitsniveau unterstützt werden, nach Maßgabe des angepassten CQI; und
Auswählen (S212) einer Modulation für einen größten Transportblock als bevorzugte Modulation.

2. Das Verfahren nach Anspruch 1, **dadurch gekennzeichnet, dass** der Schritt des Einstellens der Ziel-BLER entsprechend dem CQI nach Maßgabe des Verhältnisses zwischen dem User-Fähigkeitsniveau und der vorgegebenen BLER aufweist:
Einordnen des CQI in einen entsprechenden CQI-Bereich nach Maßgabe des Verhältnisses zwischen dem User-Fähigkeitsniveau und der vorgegebenen BLER und Einstellen der Ziel-BLER entsprechend dem CQI-Bereich (S202).

3. Das Verfahren nach Anspruch 1, **dadurch gekennzeichnet, dass** der Schritt des Anpassens des Outer-Loop-Verarbeitungswertes nach Maßgabe der Ziel-BLER aufweist:
Einstellen (S204) eines angepassten Zwischenwertes nach Maßgabe der Ziel-BLER, wobei der angepasste Zwischenwert K = (1 - Ziel-BLER) / Ziel-BLER entspricht; und
Anpassen (S206) des Outer-Loop-Verarbeitungswertes nach Maßgabe eines ACK/NACK-Feedbacks durch das UE und des angepassten Zwischenwerts.

4. Das Verfahren nach Anspruch 3, **dadurch gekennzeichnet, dass** das Anpassen des Outer-Loop-Verarbeitungswertes nach Maßgabe des ACK/NACK-Feedbacks durch das UE und des angepassten Zwischenwerts aufweist:
der Outer-Loop-Verarbeitungswert entspricht AdjOutloop = AdjOutloop + K, wenn das NACK empfangen wird; und AdjOutloop = AdjOutloop - 1 (S206), wenn das ACK empfangen wird.

5. Das Verfahren nach Anspruch 1, **dadurch gekennzeichnet, dass** N 100 oder 1000 ist.

6. Das Verfahren nach Anspruch 1, **dadurch gekennzeichnet, dass** das Verfahren ferner aufweist:
Beurteilen eines Single-Stream- oder Dual-Stream-CQI nach Maßgabe des CQI; und
Korrigieren des Single-Stream-CQI bzw. Dual-Stream-CQI.

7. Das Verfahren nach Anspruch 6, **dadurch gekennzeichnet, dass** das Verfahren ferner aufweist:
Einstellen (S214) der vom High Speed Downlink Shared Channel (HSDSCH) verwendeten Leistung als Pilotleistung + Measure Power Offset (MPO), wobei der MPO ein für jeden HSDPA-User durch einen Radio Network Controller (RNC) eingerichteter MPO ist.

8. Eine Basisstation, die für High Speed Downlink Packet Access (HSDPA)-Dienste oder High Speed Packet Access Plus (HSPA+)-Dienste verwendet wird, **dadurch gekennzeichnet, dass** sie aufweist:
ein Channel Quality Indicator (CQI)-Erwerbsmodul (502), das dazu eingerichtet ist, einen vom User Equipment (UE) gemeldeten CQI zu erwerben;
ein Blockfehlerrate (BLER)-Einstellmodul (504), das dazu eingerichtet ist, eine Ziel-BLER entsprechend dem CQI nach Maßgabe eines Verhältnisses zwischen einem User-Fähigkeitsniveau und einer vorgegebenen Fehlerrate einzustellen;
ein Outer-Loop-Verarbeitungswerteanpassmodul (506), das dazu eingerichtet ist, einen Outer-Loop-Verarbeitungswert nach Maßgabe der Ziel-BLER anzupassen; und
ein CQI-Korrekturmodul (508), das dazu eingerichtet ist, den CQI nach Maßgabe des angepassten Outer-Loop-Verarbeitungswerts zu korrigieren, wobei das CQI-Korrekturmodul (508) ferner dazu eingerichtet ist, CQI = CQI - Outer-Loop-Verarbeitungswert / N einzustellen, wobei N ein von Usern vorgegebener Verarbeitungsgewichtswert ist;
**dadurch gekennzeichnet, dass**
die Basisstation ferner aufweist: ein Modulationsauswahlmodul, das dazu eingerichtet ist, Transportblöcke jeweils unter den vom User-Fähigkeitsniveau unterstützten Modulationen nach Maßgabe des angepassten CQI zu berechnen und die größte Modulation als bevorzugte Modulation auszuwählen.

9. Die Basisstation nach Anspruch 8, **dadurch gekennzeichnet, dass**:
das BLER-Einstellmodul (504) ferner dazu eingerichtet ist, den CQI in einen entsprechenden CQI-Bereich nach Maßgabe eines Verhältnisses zwischen dem User-Fähigkeitsniveau und der vorgegebenen BLER einzuordnen und die Ziel-BLER entsprechend dem CQI-Bereich festzulegen.

## Revendications

1. Procédé de correction d'un indicateur de qualité de canal (CQI), utilisé dans des services HSDPA (High Speed Downlink Packet Access) ou des services HSPA+ (High Speed Access Plus), **caractérisé en ce qu'**il comprend :
l'acquisition (S102) d'un CQI signalé par un équipement utilisateur (UE) ;
selon une relation entre un niveau de capacité d'utilisateur et un taux d'erreur de blocs prédéfini (BLER), la définition (S104) d'un BLER cible correspondant au CQI ;
l'ajustement (S106) d'une valeur de traitement de boucle externe selon le BLER cible ; et
la correction (S108) du CQI selon la valeur de traitement de boucle externe ajustée,
dans lequel l'étape de correction du CQI selon la valeur de traitement de boucle externe ajustée comprend la définition (S208) CQI = CQI - valeur de traitement de boucle externe/N, où N est une valeur de pondération de traitement prédéfinie par les utilisateurs ;
le procédé étant **caractérisé en ce qu'**il comprend en outre : le calcul respectif (S210) de blocs de transport sous des modulations prises en charge par le niveau de capacité d'utilisateur, selon le CQI ajusté ; et
le choix (S212) d'une modulation pour un bloc de transport le plus gros en guise de modulation préférée.

2. Procédé selon la revendication 1, **caractérisé en ce que** l'étape de définition du BLER cible correspondant au CQI selon la relation entre le niveau de capacité d'utilisateur et le BLER prédéfini comprend :
selon la relation entre le niveau de capacité d'utilisateur et le BLER prédéfini, la classification du CQI selon une plage de CQI correspondante, et la définition du BLER cible correspondant à la plage de CQI (S202).

3. Procédé selon la revendication 1, **caractérisé en ce que** l'étape d'ajustement de la valeur de traitement de boucle externe selon le BLER cible comprend :
la définition (S204) d'une valeur intermédiaire ajustée selon le BLER cible, où la valeur intermédiaire ajustée K = (1 - BLER cible)/BLER cible ; et
l'ajustement (S206) de la valeur de traitement de boucle externe, selon un retour ACK/NACK par l'équipement utilisateur et la valeur intermédiaire ajustée.

4. Procédé selon la revendication 3, **caractérisé en ce que** l'ajustement de la valeur de traitement de boucle externe, selon le retour ACK/NACK par l'équipement utilisateur et la valeur intermédiaire ajustée, comprend :
si le NACK est reçu, la valeur de traitement de boucle externe AdjOutloop=AdjOutloop+K ; et, si le ACK est reçu, AdjOutloop=AdjOutloop-1 (S206).

5. Procédé selon la revendication 1, **caractérisé en ce que** N est égal à 100 ou 1000.

6. Procédé selon la revendication 1, le procédé étant **caractérisé en ce qu'**il comprend en outre :
le jugement d'un CQI à flux simple ou à flux double selon le CQI ; et
la correction du CQI à flux simple ou du CQI à flux double, respectivement.

7. Procédé selon la revendication 6, le procédé étant **caractérisé en ce qu'**il comprend en outre :
la définition (S214) de la puissance utilisée par le canal partagé en liaison descendante à grande vitesse (HSDSCH) comme étant la puissance pilote + l'écart de puissance de mesure (MPO), le MPO étant un MPO configuré par rapport à chaque utilisateur du HSDPA par un contrôleur de réseau radio (RNC).

8. Station de base utilisée pour des services HSDPA (High Speed Downlink Packet Access) ou des services HSPA+ (High Speed Access Plus), **caractérisée en ce qu'**elle comprend :
un module d'acquisition (502) d'indicateur de qualité de canal (CQI), configuré pour acquérir un CQI signalé par un équipement utilisateur (UE) ;
un module de définition (504) de taux d'erreur de blocs (BLER), configuré pour définir un BLER cible correspondant au CQI selon une relation entre un niveau de capacité d'utilisateur et un taux d'erreur prédéfini ;
un module d'ajustement de valeurs de traitement de boucle externe (506), configuré pour ajuster une valeur de traitement de boucle externe selon le BLER cible ; et
un module de correction de CQI (508), configuré pour corriger le CQI selon la valeur de traitement de boucle externe ajustée, le module de correction de CQI (508) étant en outre configuré pour définir CQI = CQI - valeur de traitement de boucle externe/N, où N est une valeur de pondération de traitement prédéfinie par les utilisateurs ;
la station de base étant **caractérisée en ce qu'**elle comprend en outre : un module de sélection de modulation, configuré pour calculer des blocs de transport respectivement sous les modulations prises en charge par le niveau de capacité d'utilisateur selon le CQI ajusté, et pour choisir la modulation la plus grande comme modulation préférée.

9. Station de base selon la revendication 8, **caractérisée en ce que** :
le module de définition de BLER (504) est en outre configuré pour classifier le CQI selon une plage de CQI correspondante en fonction de la relation entre le niveau de capacité d'utilisateur et le BLER prédéfini, et pour définir le BLER cible correspondant à la plage de CQI.
